# EUROPEAN PATENT SPECIFICATION

(11) **EP 0 549 285 B1**
(45) Date of publication and mention of the grant of the patent: **25.09.1996**
(21) Application number: 92311610.7
(22) Date of filing: 18.12.1992
(51) Int. Cl.: G01B 7/04, G01D 5/243

(54) **Apparatus for measuring displacement by variation in frequency of an oscillator**
Apparat zur Messung der Verschiebung bei Frequenzänderung eines Oszillators
Appareil pour mesurer le déplacement par variation en fréquence d'un oscillateur

(30) Priority: 20.12.1991 GB 9127112
(43) Date of publication of application: 30.06.1993
(73) Proprietor: SOLARTRON GROUP LIMITED, Farnborough, Hampshire GU14 7PW (GB)
(72) Inventor: Kuc, Stephen Tony, Southbourne, Emsworth, P010 8NQ (GB); Weller, Douglas Dennis, West Sussex P021 3HN (GB); Lewis, Adrian Vivian, Chichester, West Sussex (GB); Snoad, Kevin Anthony, Chichester, West Sussex P019 4BE (GB); Burridge, Robert Stuart, Gosport, Hampshire P013 0LR (GB)
(74) Representative: Smith, Philip Antony

(56) References cited:
- WO-A-88/03640
- GB-A- 2 060 897
- GB-A- 2 207 512
- GB-A- 2 207 765
- US-A- 4 335 442
- US-A- 4 930 096

## Description

This invention relates to apparatus for measuring displacement using a sensor in association with processing means for calibration, linearisation and digital conversion.

There are many types of conventional displacement sensor, most of which produce an analogue output, for example, linear differential transducers. However, some sensors can give a digital output using Moire fringe techniques or interferometry, but these are more suited to measuring large displacements, for example in machine tools.

Conventional analogue sensors produce very small signals requiring considerable amplification before it is possible to digitise and process the signal. In such systems, it is often necessary to provide a plug-in calibration unit special to the individual sensor, to enable standardised electronics to be used. When using a linear variable differential transformer in which an A.C. reference signal is applied to one coil and the amplitude and phase of the output from the other coil provide a measure of the amount and direction of movement of the core, a network of variable or select-on-test resistors is provided in the output circuit to enable the output amplitude to be standardised.

GB-A-2207765 is directed to a system for measuring displacement of a probe comprising a core which is connected to the probe, the core being moveable between the coils of a colpitts oscillator. The coils are switched alternately into the oscillator circuit and the oscillation frequencies of the coils are determined by the position of the moveable core. The oscillation frequencies are counted by a counter and the results are supplied to a computer for processing and calculating the distance moved by the probe. The distance moved is calculated using the difference in frequency counts. A temperature correction is made to the measurement of frequency difference between the coils, to compensate for the temperature characteristics of the coils.

GB-A-2060897 is directed to a frequency generator having two frequency generator circuits, the frequencies of which can be varied by a geometric value. The inductances of the coils in the two frequency generator circuits are varied by the movement of an iron core, the frequency variation being a function of the displacement to be measured.

GB-A-2207512 is directed to a displacement measuring apparatus including an oscillator for providing an oscillation frequency corresponding to the displacement of a probe, a counter for counting the oscillation frequency of the oscillator, and a computer for calculating the displacement of the probe in accordance with an output signal from the counter.

US 4930096 is directed to a system for transmitting under manual control data obtained from a number of independent measuring instruments to a remote installation by means of radio links. The measuring measurements are connected directly to processing circuitry specific to each measuring instrument by means of a connector in the measuring instrument into which may be inserted a connecting plug attached to the processing circuitry housing. Transmission of data from a measuring instrument to remote installation is initiated manually. In a multiple sensor system, the sensors are free-standing from each other and each transmits data through its own radio transmitter. A RAM is provided within the housing of the processing circuitry for storing the digital data input from the measuring instrument and an identification number assigned to that measuring instrument.

According to the invention there is provided apparatus for measuring displacement comprising a sensor head for varying the frequency of an oscillator in response to the displacement to be measured, means for measuring the frequency change, and a microprocessor for converting the measured frequency change to a digital output representing the displacement by reference to stored calibration coefficients specific to the sensor head, characterised in that the frequency measuring means and microprocessor are mounted in a connector remote from the sensor head, the connector being adapted for direct connection to similar connectors of other sensor heads, and the microprocessor contains a unique I.D. for that sensor head, allowing a host computer to identify each sensor head.

The calibration coefficients form a look-up table which is conveniently stored in a ROM.

A displacement sensor embodying the invention may have a number of advantages, most notably, by converting the mechanical displacement into a shift in frequency, the sensor is able to produce a digital output without the need for high gain amplifiers or a/d converters. Also, the electronics to operate the sensor are mounted in a connector providing a compact unit which requires no further processing electronics and which can be directly coupled to a number of other similar sensors.

Embodiments of the invention will now be described by way of example, and with reference to the accompanying drawings, in which:
Figure 1 is a schematic diagram of the sensor head;
Figure 2 is a block schematic diagram of the sensor embodying the invention, including the sensor head shown in Figure 1; and
Figure 3 is a typical installation including the sensor of Figure 2.

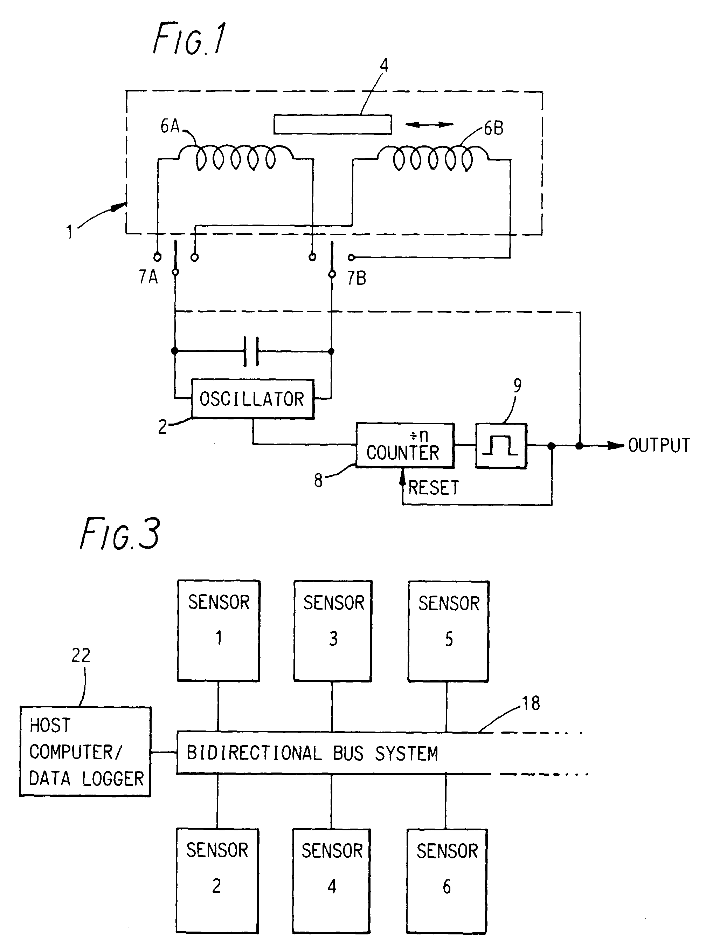

The sensor head 1 of Figure 1 measures displacement by converting it into a variation in the frequency of an oscillator 2. The displacement to be measured causes movement of a core of ferromagnetic material 4, such as radiometal alloy, within a pair of inductor coils 6A and 6B, thus causing a variation in the inductance thereof. Each of the coils 6A and 6B can form part of the tuned circuit of an oscillator 2, and thus the frequency of oscillation varies in accordance with the displacement to be measured. The variation of frequency with displacement is not linear, but this non-linearity may be corrected within the processing circuitry. Although the oscillator 2, the two switches 7A and 7B which switch between the two coils 6A and 6B and the first counter8 which counts the output cycles of the oscillator 2 are shown in Figure 1 to be outside the sensor head 1, in another embodiment these items may be incorporated into the sensor head.

The two coil system of Figure 1 is a differential system in which the magnetic material 4 moves out of one coil 6A into a similar coil 6B mounted coaxially such that as the inductance of one inductor is reduced, the inductance of the other is increased, and the difference in frequencies is calculated subsequently in a micro-processor.

The output cycles of the oscillator 2, in Figure 1, are counted in a first counter 8. After n cycles of the oscillation have been counted, the counter 8 produces an output pulse 9. The pulse 9 operates the two switches 7A and 7B which switch between the two coils 6A and 6B of the tuned circuit of the oscillator 2, to disconnect one of the coils 6A and 6B and connect the other coil to the tuned circuit. The output pulse 9 from the first counter 8 also resets the counter 8 to zero and inhibits the counter's operation for a period of time sufficient to allow the frequency of the oscillator 2 to stabilize, after which the counter 8 proceeds to count n cycles of the frequency due to the connected coil 6A or 6B.

The time between the trailing edge of one output pulse from the first counter 8, and the leading edge of the subsequent output pulse defines the period of n cycles of the oscillator for each coil 6A and 6B, and thus the frequencies of oscillation corresponding to each coil. The difference between the periods of n cycles corresponding to each coil is a function of the displacement to be measured.

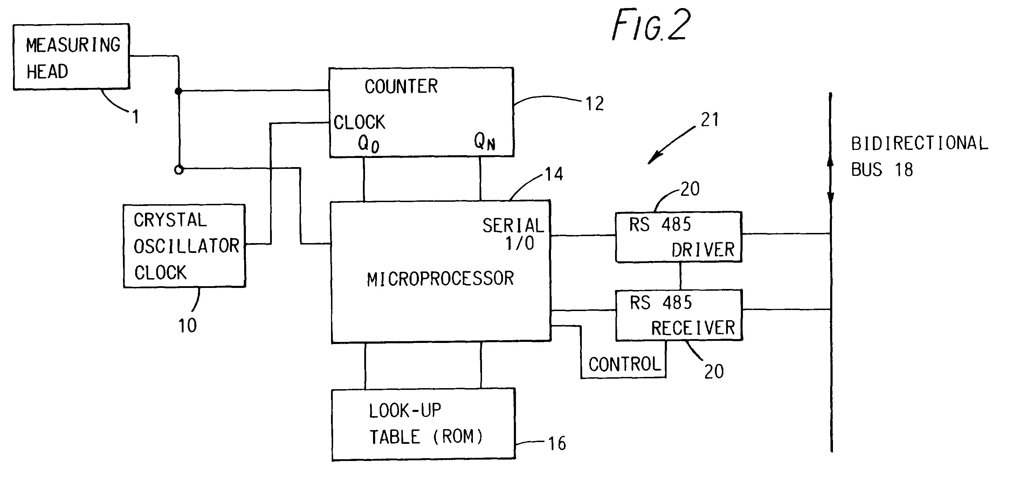

To measure the period of n cycles of the oscillator 2, the output pulse 9 from the first counter 8 is applied to a second counter 12 of Figure 2, which is driven from a high frequency crystal clock 10. At the trailing edge of the pulse 9, the second counter 12 is allowed to count cycles from the high frequency clock 10 until the leading edge of the subsequent output pulse from the first counter 8 is received. The count from the second counter 12, which represents the period of n cycles of the oscillator 2, and thus the frequency of oscillation, is loaded into the microprocessor 14 and the second counter 12 is reset to zero.

At the trailing edge of the output pulse 9 from the first counter 8, the above process is repeated for the other of the two coils 6A and 6B.

The difference between the counts obtained corresponding to each coil 6A and 6B, which is representative of the displacement to be measured, is taken by the microprocessor 14 and this is compared with a look-up table 16 stored in the memory during initial calibration. The micro-processor 14 thus converts the counts of the counter 12 into a positional reading, corrected for non-linearity of the frequency change with displacement and for the individual characteristics of the sensor head, and interpolates between stored values in the memory.

The output from the micro-processor is connected to a bi-directional interface/bus 18 via drivers 20, for example the RS485 or RS232 system. It is possible to process some of the data obtained, in the micro-processor, for example to determine maximum, minimum and mean results over a period, or to take measurements at predetermined times, thus reducing the amount of data needed to be transmitted over the bus system.

For each sensor of the kind shown in Figure 2 the measuring or sensor head 1 is attached by a long lead to a connector containing the processing circuitry, i.e. the elements 10, 12, 14, 16 and 20. This connector is designed to be plugged directly to other connectors of other sensors to build up the bi-directional bus 18 connecting the sensors to a host computer/data logger 22 as shown in Figure 3. The connector comprises a plastics housing for the electronics, including a lead connected to the sensor head. Alternatively a metal housing can be used for protection against radio-frequency interference. A D-type input socket and a D-type output socket provide for the plug connection of successive units.

In a further embodiment, the connector comprises a metal housing which is sealed to at least IP60 standard. The connector may be connected directly to other similar connectors without the need for lead linkage with complementary connectors at each end, to form a single assembly mountable on the apparatus over which the individual sensor heads are distributed.

Each of the sensors is provided with a unique ID programmed into it at the factory so that the host computer can identify which sensor is in which position on the bus.

In another embodiment of the invention, the memory (16) of Figure 2 in which the sensor calibration coefficients are stored, and the unique ID allocated to each sensor, are contained in a separate unit, which may be plugged into the connector housing the processing circuitry. As such, any damage occurring to the associated sensor head or lead would not automatically require the entire unit to be replaced. Also, the memory (16) may be physically implemented in, for example, the form of a key and need not be re-programmable.

Various alternatives to the embodiments described are possible and will occur to those skilled in the art. For example, alternative magnetic materials such as ferrite may be used for the moveable core. Also, whilst the two coil system has the advantage that being a differential measurement it is much less sensitive to temperature variation, a single coil system could be used.

For the two coil system, once the frequencies corresponding to each coil have been obtained, it is possible to take either the ratio or difference of the two frequencies to calculate the displacement measured by the sensor. In the case of the ratio of frequencies, the counts corresponding to the two frequencies are separately transferred from the counter 12 to the microprocessor 14, which then calculates the ratio and compares this with the stored values in ROM 16.

Furthermore, if desired, the timing of the operation of the switches 7A and 7B, and the timing of the commencement of the counting of n cycles of the oscillator 2 for each coil 6A and 6B, can be controlled by the microprocessor 14.

## Claims

1. Apparatus for measuring displacement comprising a sensor head (1,2,3,4,5,6) for varying the frequency of an oscillator (2) in response to the displacement to be measured, means (7A,78,8,9;10,12) for measuring the frequency change, and a microprocessor (14) for converting the measured frequency change to a digital output representing the displacement by reference to stored calibration coefficients specific to the sensor head (1,2,3,4,5,6), characterised in that the frequency measuring means (7A,7B,8,9;10,12) and microprocessor (14) are mounted in a connector remote from the sensor head (1,2,3,4,5,6), the connector being adapted for direct connection to similar connectors of other sensor heads, and the microprocessor (14) contains a unique I.D. for that sensor head, allowing a host computer to identify each sensor head.

2. Apparatus as claimed in claim 1 in which the sensor head comprises a core (4) displaceable within a coil (6A,6B) of the oscillator (2) to vary the frequency.

3. Apparatus as claimed in claim 2 in which the core (4) is displaceable between two coils (6A,6B) which are alternately connected to the oscillator (2) and the frequency change between the two coils provides a measure of the displacement.

4. Apparatus as claimed in claim 3 comprising a first counter (8) coupled to the output of the oscillator (2) and arranged to switch the connection between the coils (6A,6B) and the oscillator after a time interval comprising at least n cycles of the oscillator.

5. Apparatus as claimed in claim 4 in which the means (7A,7B,8,9;10,12) for measuring the frequency change comprises a second counter (12) gated by the output of the first counter (8) to count clock pulses, and means (14) for generating a difference count corresponding to the difference of oscillator frequency between the two coils (6A,6B).

6. Apparatus as claimed in claim 4 or 5, in which the means (7A,7B,8,9;10,12) for measuring the frequency change comprises a counter (12) arranged to supply counts to the microprocessor (14) corresponding to the two frequencies of the oscillator (2), the microprocessor (14) being designed to calculate the difference in the frequencies for comparison with the stored calibration coefficients.

7. Apparatus as claimed in claim 4 or 5 in which the means (7A,7B,8,9;10,12) for measuring the frequency change comprises a counter (12) arranged to supply counts to the microprocessor (14) corresponding to the two frequencies of the oscillator (2), the microprocessor (14) being designed to calculate the ratio of the frequencies for comparison with the stored calibration coefficients.

## Patentansprüche

1. Vorrichtung für die Messung von Verlagerung, umfassend einen Sensorkopf (1,2,3,4,5,6,) für das Verändern der Frequenz eines Oszillators (2) in Reaktion auf die zu messende Verlagerung, Mittel (7A,7B,8,9; 10,12) für das Messen der Frequenzänderung, und einen Mikroprozessor (14) für das Umsetzen der gemessenen Frequenzänderung in einen digitalen Ausgang, der die Verlagerung repräsentiert durch Referenz auf gespeicherte Eichkoeffizienten, die für den Sensorkopf (1,2,3,4,5,6) spezifisch sind, dadurch gekennzeichnet, daß das Frequenzmeßmittel (7A,7B,8, 9;10,12) und der Mikroprozessor (14) in einem Verbinder fern von dem Sensorkopf (1,2,3,4,5,6) montiert sind, welcher Verbinder ausgebildet ist für den direkten Anschluß an ähnliche Verbinder von anderen Sensorköpfen, und daß der Mikroprozessor (14) eine zugeordnete I.D. für jenen Sensorkopf enthält, welches einem Wirtsrechner ermöglicht, jeden Sensorkopf zu identifizieren.

2. Vorrichtung nach Anspruch 1, bei der der Sensorkopf einen Kern (4) umfaßt, der innerhalb einer Spule (6A,6B) des Oszillators (2) verlagerbar ist, um die Frequenz zu verändern.

3. Vorrichtung nach Anspruch 2, bei der der Kern (4) zwischen zwei Spulen (6A,6B) verlagerbar ist, die alternierend mit dem Oszillator (2) verbunden sind, und die Frequenzänderung zwischen den beiden Spulen ein Maß für die Verlagerung bildet.

4. Vorrichtung nach Anspruch 3, umfassend einen ersten Zähler (8), angekoppelt an den Ausgang des Oszillators (2) und ausgebildet zum Schalten der Verbindung zwischen den Spulen (6A,6B) und dem Oszillator nach einem Zeitintervall, das zumindest n-Zyklen des Oszillators umfaßt.

5. Vorrichtung nach Anspruch 4, bei der die Mittel (7A,7B,8,9;10, 12) für das Messen der Frequenzänderung einen zweiten Zähler (12) umfassen, gegattert durch den Ausgang des ersten Zählers (8) zum Zählen von Taktimpulsen, und Mittel (14) umfassen für das Erzeugen eines Differenzzählwerts entsprechend der Differenz der Oszillatorfrequenz zwischen den beiden Spulen (6A,6B).

6. Vorrichtung nach Anspruch 4 oder 5, bei der die Mittel (7A,7B, 8,9;10,12) für das Messen der Frequenzänderung einen'Zähler (12) umfassen, ausgebildet zum Liefern von Zählständen an den Mikroprozessor (14) entsprechend den beiden Frequenzen des Oszillators (2), welcher Mikroprozessor (14) konstruiert ist zum Berechnen der Differenz der Frequenzen für den Vergleich mit den gespeicherten Eichkoeffizienten.

7. Vorrichtung nach Anspruch 4 oder 5, bei der die Mittel (7A,7B, 8,9;10,12) für das Messen der Frequenzänderung einen Zahler (12) umfassen, ausgebildet zum Liefern von Zählständen an den Mikroprozessor (14) entsprechend den beiden Frequenzen des Oszillators (2), welcher Mikroprozessor (14) konstruiert ist zum Berechnen des Verhältnisses der Frequenzen für den Vergleich mit den gespeicherten Eichkoeffizienten.

## Revendications

1. Dispositif de mesure de déplacement comprenant une tête de capteur (1, 2, 3, 4, 5, 6), pour faire varier la fréquence d'un oscillateur (2) en réponse au déplacement à mesurer, un moyen de mesure de fréquence (7A, 7B, 8, 9 ; 10, 12) pour mesurer la variation de fréquence, et un microprocesseur (14) pour convertir la variation de fréquence mesurée en une sortie numérique représentant le déplacement, par référence à des coefficients de calibrage spécifiques à la tête de capteur (1, 2, 3, 4, 5, 6), caractérisé en ce que le moyen de mesure de fréquence (7A, 7B, 8, 9 ; 10, 12) et le microprocesseur (14) sont montés dans un connecteur à distance de la tête de capteur (1, 2, 3, 4, 5, 6), le connecteur étant conçu pour une connexion directe à des connecteurs similaires d'autres têtes de capteur ; et en ce que le microprocesseur (14) contient une identification unique pour chaque tête de capteur, ce qui permet à un ordinateur central d'identifier chaque tête de capteur.

2. Dispositif selon la revendication 1, dans lequel la tête de capteur comprend un noyau (4) pouvant se déplacer à l'intérieur d'une bobine (6A, 6B) de l'oscillateur (2) pour faire varier la fréquence.

3. Dispositif selon la revendication 2, dans lequel le noyau (4) peut se déplacer entre deux bobines (6A, 6B) qui sont connectées de façon alternée à l'oscillateur (2), et dans lequel la variation de fréquence entre les deux bobines fournit une mesure du déplacement.

4. Dispositif selon la revendication 3, comprenant un premier compteur (8) raccordé à la sortie de l'oscillateur (2) et conçu pour permuter la connexion entre les bobines (6A, 6B) et l'oscillateur après un intervalle de temps comprenant au moins n cycles de l'oscillateur.

5. Dispositif selon la revendication 4, dans lequel le moyen (7A, 7B, 8, 9, ; 10, 12) pour mesurer la variation de fréquence comprend un second compteur (12) déclenché par la sortie du premier compteur (8) pour compter des impulsions d'horloge, et un moyen (14) pour produire un compte de différence correspondant à la différence de fréquence d'oscillateur entre les deux bobines (6A, 6B).

6. Dispositif selon la revendication 4 ou 5, dans lequel le moyen (7A, 7B, 8, 9, ; 10, 12) pour mesurer la variation de fréquence comprend : un compteur (12) conçu pour délivrer, au microprocesseur (14), des comptes correspondant aux deux fréquences de l'oscillateur (2), le microprocesseur (14) étant conçu pour calculer la différence des fréquences, pour comparaison avec les coefficients de calibrage mémorisés.

7. Dispositif selon la revendication 4 ou 5, dans lequel le moyen (7A, 7B, 8, 9, ; 10, 12) pour mesurer la variation de fréquence comprend : un compteur (12) conçu pour délivrer, au microprocesseur (14), des comptes correspondant aux deux fréquences de l'oscillateur (2), le microprocesseur (14) étant conçu pour calculer le rapport des fréquences, pour comparaison avec les coefficients de calibrage mémorisés.
